# EUROPEAN PATENT APPLICATION

(11) **EP 3 955 234 A1**
(43) Date of publication of application: **16.02.2022**
(21) Application number: 21190584.9
(22) Date of filing: 10.08.2021
(51) Int. Cl.: G09B 19/22, A63F 1/18, G06N 3/02, G07F 17/32

(54) **TRAINING SYSTEM FOR TRAINING A USER IN A PREDEFINED OPERATION**

(30) Priority: 10.08.2020 IN 202021034255
(71) Applicant: Play Games24x7 Private Limited, Mumbai 400063 (IN)
(72) Inventor: Eswaran, Sharanya, 560035 Bangalore (IN); Sachdeva, Mridul, 143001 Amritsar (IN); Mukherjee, Tridib, 560049 Bangalore (IN); Vimal, Vikram, 811101 Kutaut (IN); Seth, Deepanshi, 249404 Haridwar (IN); Kumar Agrawal, Sanjay, 560037 Bangalore (IN)
(74) Representative: Grosset-Fournier, Chantal Catherine

(57) **Abstract**

A training system is disclosed here for training a user in a predefined operation to make a best decision in a predefined operation. A first storage module stores a first log of the decisions made by the skilled users during the predefined operation. A first pre-processing module is in communication with the first storage module to pre-process the first log to generate a first multi-dimensional image array of the predefined operation. A training module trains a model based on the first multi-dimensional image array to generate a skilled strategy model. A second storage module stores a second log of decisions made by the user in the predefined operation and pre-processes the second log to generate a second multi-dimensional image array. A comparison module compares the second multi-dimensional image array with the skilled strategy model to generate a prediction of the best decision to be made by the user.

## Description

### TECHNICAL FIELD

The present invention relates to a training system and a method associated with the training system. Specifically, a training system and an associated method for training a user in a predefined operation to make a best decision based on previous decisions made by skilled users in the predefined operation.

### BACKGROUND

The identified problem in the current art is that most users are prone to commit mistakes if they lack a certain level of skill that is required to make right decisions, especially regarding "what should be the right move?" to make in a given situation where they need to choose from multiple options available in front of them when there are two unknowns: (i) the options available are probabilistic and not known prior (i.e., a stochastic system); and (ii) multiple competitors are trying to make local decisions based on their respective local knowledge (i.e., the entire system state is only partially observable locally) towards reaching a common objective faster.

As in the example shown, users or gamers with mediocre skills in a rummy game might find it difficult to make the right decision, such as the below-mentioned points:
- Whether to drop, pass, fold or play, which is usually at the beginning, based on the cards dealt?
- Which card to discard in each move and from which set of cards to pick, while not inadvertently aiding the opponents?
- Check for winning state, and if found, declare and finish

Another example, is that of the choice of paramedics in a large city with equipment and medicines in hand, which is similar to cards in hand according to previous example. The choice of paramedics raises questions so as to:
- Respond to distress signals (similar to pick choice) depending on what equipment/medicines they have been supplied with or have in hand.
- Which other distressed services they can discard (e.g., a patient getting discharged to accommodate for a new distress call) while not inadvertently aiding other competing paramedic service providers (by prematurely discarding on the distressed patient, resulting in subsequent distress calls going to other service providers)
- Check for winning state (e.g., no. of distress called successfully served with a certain combination of the type of distresses served in a given time frame), and if found, declare.

Therefore, there is a need to understand user behavior. For example, player behavior, where observing the gameplay of users sheds immense light on various aspects about the players and their decision making in the game moves, such as skills, strategies, engagement, intention, retention and difficulty level. In view of the above faced problems with regard to decision making, there is a need for an end-to-end informatics around dynamics of the situation (for example, game dynamics) based on the decision of players.

### SUMMARY OF THE INVENTION

The following presents a simplified summary of the subject matter in order to provide a basic understanding of some aspects of subject matter embodiments. This summary is not an extensive overview of the subject matter. It is not intended to identify key/critical elements of the embodiments or to delineate the scope of the subject matter. Its sole purpose to present some concepts of the subject matter in a simplified form as a prelude to the more detailed description that is presented later.

A training system and a method are disclosed here for training a user to perform a predefined operation to make the best decision based on previous best decisions made by skilled users in the predefined operation. The training system comprises at least one processor coupled with a first storage module and a second storage module, a first pre-processing module, a training module, a second pre-processing module, and a comparison module. The first storage module stores a first log of the decisions made by the skilled users during the predefined operation. The first pre-processing module is in communication with the first storage module to pre-process the first log to generate a first multi-dimensional image array of each state of the predefined operation. The training module trains a model based on the first log at a predetermined state of the predefined operation, which is captured as the first multi-dimensional image array, to generate a skilled strategy model.

The second storage module stores the second log of decisions made by the user in the predefined operation. The second pre-processing module is in communication with the second storage module to pre-process the second log to generate a second multi-dimensional image array. The comparison module compares the second multi-dimensional image array with the skilled strategy model to generate a prediction of the best decision to be made by the user. In an embodiment, the first pre-processing module generates snapshots based on the pre-processed log to make the first log machine-readable and machine learnable. In an embodiment, the prediction of the best move is displayed on a user device being used by the user so that the user is prompted to execute the best move.

In an embodiment, the training module comprises a personalized upskilling module that performs personalized upskilling of the model depending on the users' mistake pattern. In an embodiment, the training module comprises a user mistake mining module that detects mistake patterns in users, which are mined without referring to the skilled strategy model. In an embodiment, the training module comprises a skill scoring module that generates a skill score for the user depending on the deviation of users' decision from the skilled strategy model, wherein this skilled strategy model is used as a benchmark for generating the skill score for the user. In an embodiment, the training module comprises a skill-based module assigns skill-based campaigns and services that are dependent on the users' skill that is obtained from a skill score.

A non-transitory computer program product is also disclosed here to train a user in performing a predefined operation to make a best decision based on previous decisions made by skilled users in the predefined operation. The computer program product comprises a first programmed code to process stored instructions in a first storage module and a second storage module via at least one processor coupled with the first storage module and the second storage module. The computer program product comprises a second programmed code to store, via the first storage module, a first log of the decisions made by the skilled users during the predefined operation. The computer program product comprises a third programmed code to pre-process, via a first pre-processing module in communication with the first storage module, the first log to generate a first multi-dimensional image array of each state of the predefined operation.

The computer program product comprises a fourth programmed code to train, via a training module, a model based on the first log at a predetermined state of the predefined operation that is captured as the first multi-dimensional image array to generate a skilled strategy model. The computer program product comprises a fifth programmed code to store, via the second storage module, a second log of decisions made by the user in the predefined operation. The computer program product comprises a sixth programmed code to pre-process, via a second pre-processing module in communication with the second storage module, the second log to generate a second multi-dimensional image array. Finally, the computer program product comprises a seventh programmed code to compare, via a comparison module, the second multi-dimensional image array with the skilled strategy model to generate a prediction of the best decision to be made by the user.

These and other objects, embodiments and advantages of the present invention will become readily apparent to those skilled in the art from the following detailed description of the embodiments having reference to the attached figures, the invention not being limited to any particular embodiments disclosed.

### BRIEF DESCRIPTION OF FIGURES

The foregoing and further objects, features and advantages of the present subject matter will become apparent from the following description of exemplary embodiments with reference to the accompanying drawings, wherein like numerals are used to represent like elements.

It is to be noted, however, that the appended drawings along with the reference numerals illustrate only typical embodiments of the present subject matter, and are therefore, not to be considered for limiting of its scope, for the subject matter may admit to other equally effective embodiments.
Figure 1A illustrates a method flow for training a user in a predefined operation, to make the best decision based on previous decisions made by skilled users in the predefined operation, as an example embodiment.
Figure 1B describes a schematic flow showing the system and the process involved in training the user in the predefined operation, to make the best decision based on previous decisions made by skilled users in the predefined operation, as an example embodiment.
Figure 2 shows a system diagram that is associated with the working of the training system as explained in correspondence with Figures 1A and 1B, in an example embodiment.
Figure 3 shows another embodiment of the system diagram as shown in Figure 2 that is associated with the working of the training system as explained in correspondence with Figures 1A and 1B, in an example embodiment.

### DETAILED DESCRIPTION

Exemplary embodiments now will be described with reference to the accompanying drawings. The disclosure may, however, be embodied in many different forms and should not be construed as limited to the embodiments set forth herein; rather, these embodiments are provided so that this disclosure will be thorough and complete, and will fully convey its scope to those skilled in the art. The terminology used in the detailed description of the particular exemplary embodiments illustrated in the accompanying drawings is not intended to be limiting. In the drawings, like numbers refer to like elements.

It is to be noted, however, that the reference numerals used herein illustrate only typical embodiments of the present subject matter, and are therefore, not to be considered for limiting of its scope, for the subject matter may admit to other equally effective embodiments.

The specification may refer to "an", "one" or "some" embodiment(s) in several locations. This does not necessarily imply that each such reference is to the same embodiment(s), or that the feature only applies to a single embodiment. Single features of different embodiments may also be combined to provide other embodiments.

As used herein, the singular forms "a", "an" and "the" are intended to include the plural forms as well, unless expressly stated otherwise. It will be further understood that the terms "includes", "comprises", "including" and/or "comprising" when used in this specification, specify the presence of stated features, integers, steps, operations, elements, and/or components, but do not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements may be present. Furthermore, "connected" or "coupled" as used herein may include operatively connected or coupled. As used herein, the term "and/or" includes any and all combinations and arrangements of one or more of the associated listed items.

Unless otherwise defined, all terms (including technical and scientific terms) used herein have the same meaning as commonly understood by one of ordinary skill in the art to which this disclosure pertains. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

The figures depict a simplified structure only showing some elements and functional entities, all being logical units whose implementation may differ from what is shown. The connections shown are logical connections; the actual physical connections may be different. It is apparent to a person skilled in the art that the structure may also comprise other functions and structures.

Also, all logical units described and depicted in the figures include the software and/or hardware components required for the unit to function. Further, each unit may comprise within itself one or more components which are implicitly understood. These components may be operatively coupled to each other and be configured to communicate with each other to perform the function of the said unit.

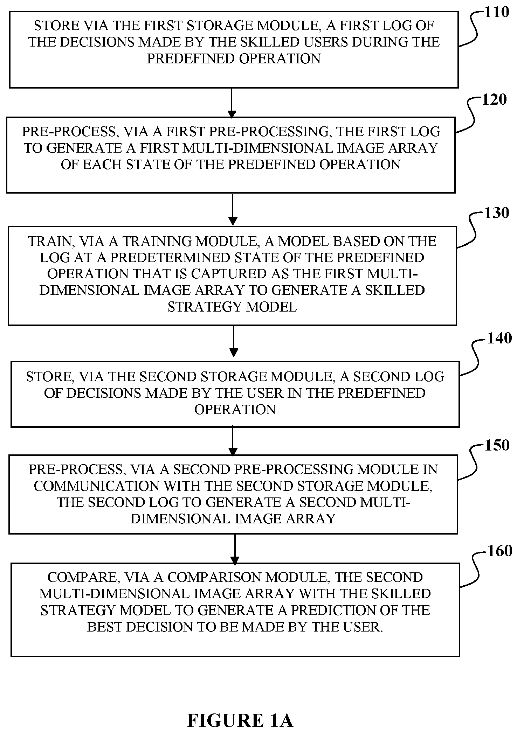

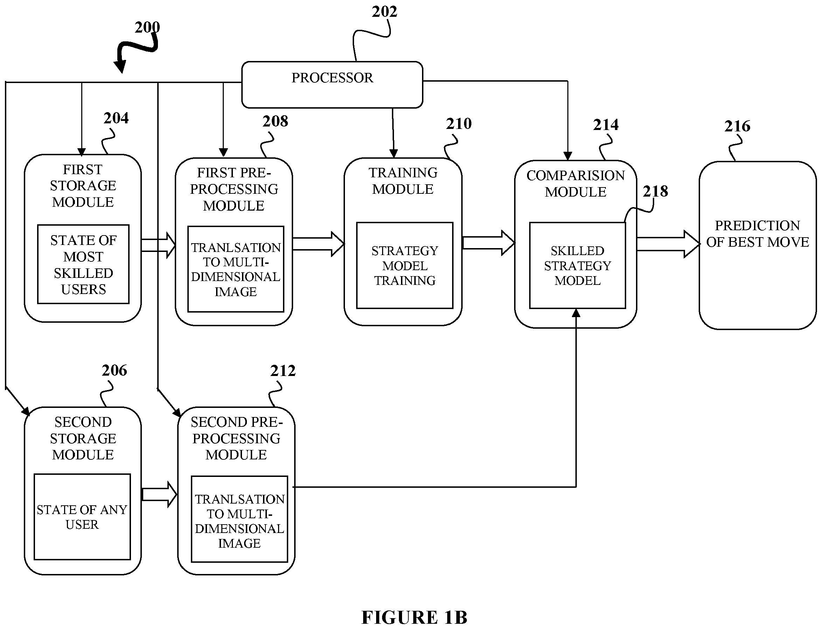

Figures 1A and 1B illustrates a method flow and a training system 200 respectively, for training a user in a predefined operation, to make the best decision based on previous decisions made by skilled users in the predefined operation, as an example embodiment. The training system 100 and the method disclosed here provides the training a user to perform a predefined operation, to make the best decision based on previous best decisions made by skilled users in the predefined operation. The training system 200 comprises at least one processor 202 coupled with a first storage module 204 and a second storage module 206, a first pre-processing module 208, a training module 210, a second pre-processing module 212, and a comparison module 214. The first storage module 204 stores 110 a first log of the decisions made by the skilled users during the predefined operation. The first pre-processing module 208 is in communication with the first storage module 204 to pre-process 120 the first log to generate a first multi-dimensional image array of each state of the predefined operation.

As referenced herein, the term "multidimensional image" refers to a computer image that is stored as a multi-dimensional array. The multidimensional image is 3-dimensional, to be specific, with two dimensions to capture image size, e.g., 1024x1024 pixel images; and 3rd dimension to capture color, e.g., RGB value, in each pixel. Similarly, in the training system 200 as disclosed herein, the game snapshot is captured as a multi-dimensional array, which is similar to how an image is stored digitally in a machine. Here the first two dimensions are not pixels but 4x14 (no. of suits x card value) in case of a card game or 'n x m' in paramedics scenario, where n is the no. of different types of distresses, and m is the equipment or resources or medicines.

The training module 210 trains 130 a model based on the first log at a predetermined state of the predefined operation, which is captured as the first multi-dimensional image array, to generate a skilled strategy model 218. The second storage module 206 stores 140 the second log of decisions made by the user in the predefined operation. The second pre-processing module 212 is in communication with the second storage module 206 to pre-process 150 the second log to generate a second multi-dimensional image array. The comparison module 214 compares 160 the second multi-dimensional image array with the skilled strategy model 218 to generate a prediction of the best decision to be made by the user.

A non-transitory computer program product is also disclosed here to train a user in performing a predefined operation to make a best decision based on previous decisions made by skilled users in the predefined operation. The computer program product comprises a first programmed code to process stored instructions in a first storage module 204 and a second storage module 206 via at least one processor 202 coupled with the first storage module 204 and the second storage module 206. The computer program product comprises a second programmed code to store 110, via the first storage module 204, a first log of the decisions made by the skilled users during the predefined operation. The computer program product comprises a third programmed code to pre-process 120, via a first pre-processing module 208 in communication with the first storage module 204, the first log to generate a first multi-dimensional image array of each state of the predefined operation.

The computer program product comprises a fourth programmed code to train 130, via a training module 210, a model based on the first log at a predetermined state of the predefined operation that is captured as the first multi-dimensional image array to generate a skilled strategy model 218. The computer program product comprises a fifth programmed code to store 140, via the second storage module 206, a second log of decisions made by the user in the predefined operation. The computer program product comprises a sixth programmed code to pre-process 150, via a second pre-processing module 212 in communication with the second storage module 206, the second log to generate a second multi-dimensional image array. Finally, the computer program product comprises a seventh programmed code to compare 160, via a comparison module 214, the second multi-dimensional image array with the skilled strategy model 218 to generate a prediction of the best decision to be made by the user.

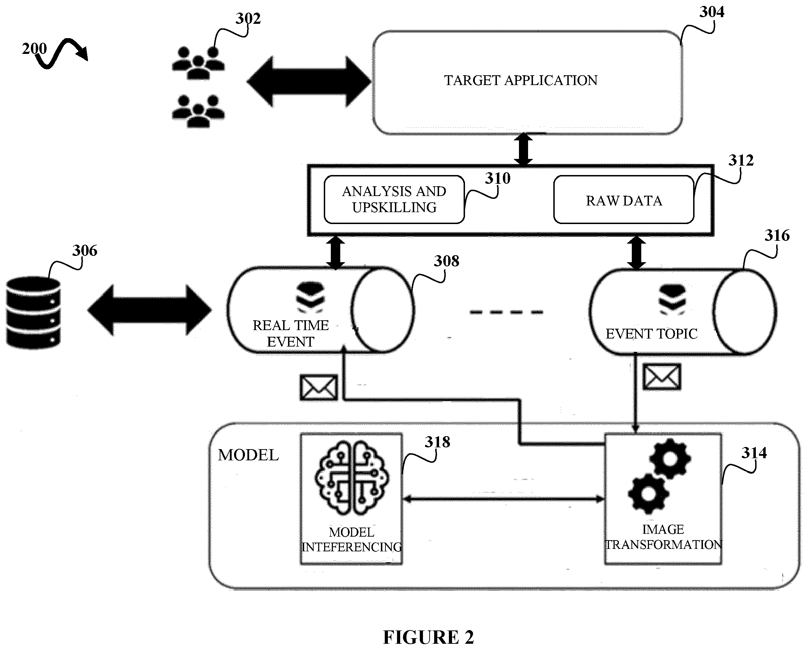

Figure 2 shows a system diagram that is associated with the working of the training system 200 as explained in correspondence with Figures 1A and 1B, in an example embodiment. In the context of a card game, the user's module 302 which is also the first storage module 204 contains the data of best decisions made by a skilled user, or in other words best strategies used by a skilled player. The target application 304 is the first pre-processing module 208 for the first pre-processing of the data of best decisions made by the skilled user, or in other words, the best strategies used by a skilled player. The data containing the best decisions made by the skilled user or the best strategies used by a skilled player is transferred to an analysis and upskilling module 310 or the training module 210. The analysis and upskilling module 310 or the training module 210 as shown in Figure 2, performs personalized upskilling, conducts skill-based campaigns and other skilled based services. The analysis and upskilling module 310 also conducts user mistake mining and user skill scoring based on the best decisions or best strategies made by the skilled user or player.

The live report and storage module 306 or the second storage module 206 that contains user data of decisions made by a user in the operation, or in other words, the live playing strategy of a player, wherein this user data is transferred via a real time event module 308 to the raw data module 312. The raw data module 312 contains raw contains second logs in text format as defined in the description of Figures 1A and 1B, which capture the state of the user or player and communicates the second logs to an image transformation module 314 or the second pre-processing module 212 via an event topic module 316. The event topic module 316 consumes selected second logs and transfers to the image transformation module 314 where the second log is transformed into second first multi-dimensional image array. The model inferencing module 318 or the comparison module 214 contains the skilled strategy model 218, which is generated depending on training of a model based on the best decisions or strategies of skilled users or players. The model inferencing module 318 is used to compare the second multi-dimensional image array based on the users or players and the skilled strategy model 218.

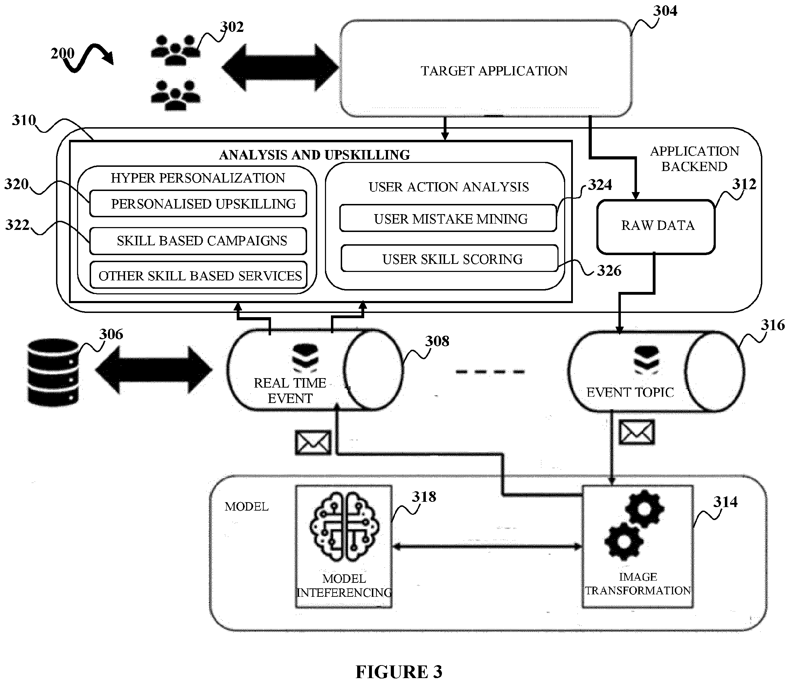

Figure 3 shows another embodiment of the training system 200 as shown in Figure 2 that is associated with the working of the training system 200 as explained in correspondence with Figures 1A and 1B, in an example embodiment. As disclosed in Figure 2, the analysis and upskilling module 310 or the training module 210 performs a list of services. The services of the analysis and upskilling module 310 are performed using multiple modules that comprise a personalized upskilling module 320, a skill-based module 322, a user mistake mining module 324, and a user skill scoring module 326. The personalized upskilling module 320 performs personalized upskilling of the model depending on a users' mistake pattern, the fact that not all the users commit same mistake, depending on common mistake patterns of a user the up-skilling is personalized, and based on different users with different mistake pattern get different upskilling to rectify their mistakes.

The user mistake mining module 324 detects mistake patterns in users, which are mined without reference skill model. For example, a paramedic may not serve a certain type of distress properly because poor handling of requisite equipment. The skill scoring module 326 generates a skill score for the user depending on the deviation of users' decision from the skilled strategy model 218, wherein this skilled strategy model 218 is used as benchmark for generating the skill score for the user. The skill-based module 322 assigns skill-based campaigns and services that are dependent on users' skill that is obtained from a skill score. For example, matching similarly skilled users in the case of paramedics, where not all the paramedics are allowed to take all types of distress calls, providing targeted offers, such as bonuses for high skilled paramedics for serving more complex distress calls.

In other words, the first storage module 204 has a collection of data that includes, for example, the state of most skilled users. This is DB of raw action logs of each skilled user. For example, in Rummy gameplay, this log would include cards in hand at a given move, actions taken in that move (that is, pick happened from open deck or closed deck, which card got discarded, etc.) by skilled users who has played significant numbers of games and have performed well overall. In another example of a paramedics scenario, this includes equipment, medicines, and other resources that are available at a given point in time, actions taken at that time (i.e., pick a distress call to serve, which other distresses got discharged, etc.) by the skilled paramedics service providers who has performed well consistently for significant amount of time.

Referring to Figure 2, the first pre-processing module 208 provides the translation of the logs to a first multi-dimensional image based on the skilled users. This is a pre-processing step to convert the raw logs into the multi-dimensional image representation of each game state and snapshots to make it machine readable and learnable. The training module 210 performs supervised learning and training of a model on what decisions skilled users have made at a game state snapshot captured as the multi-dimensional image array and is defined as a mode of strategy model training. The skilled strategy model 218 is the output of the training step, that is, the supervised model learnt from the actions taken by skilled users at different game state snapshots captured as the multi-dimensional image arrays.

This skilled strategy model 218 is referred to infer what should be best action to take at a given state, captured as a multi-dimensional image array. Parallelly, there is the second storage module 206 stores a second log of decisions made by the user in the predefined operation. For example, this is the raw log for any user (for whom we want to infer what should be the best action for him at a given step in the game). The raw logs are again translated into the multi-dimensional array that would then be used for inferencing from the skilled strategy model 218 towards prediction on best move. This inferencing for prediction is used to compare and benchmark any players' moves to the best possible moves. This opens up all the potential use cases of players' skill identification (from a few moves in the game), mistakes made, upskilling requirement, and so on. The prediction of best move at a given game state is based on comparison of the second multi-dimensional image array with the skilled strategy model 218 to generate a prediction of the best decision to be made by the user as described before. Or in other words, the second multi-dimensional image array is inferred with the skilled strategy model 218 to make the prediction of the bets move.

As a working example, in a skill-based card games involve 3 major intellectual decision points from a player:
- {D1} to drop, pass, fold, or play (usually, at the beginning) based on the cards dealt;
- {D2} which card to discard in each move (and from which set of cards to pick) while not inadvertently aiding the opponents;
- {D3} check for winning state, and if found, declare and finish. Although useful, insights only on {D1} of players are largely inadequate, since majority of a game revolves around {D2} decision(s) of (pick and) discard in every move.

Therefore, the training system 200 disclosed here forces on end-to-end informatics around game dynamics stemming from {D2} decisions of players. Such game intelligence helps us advance closer to provide a perfectly personalized and wholesome game-play experience. For example, if there are some common mistake patterns identified for players the training system 200 provides more targeted services towards up-skilling or other campaign reach-outs. The training system 200 also enables skill bucketing of players that in turn leads to more fine-grained matching of players to play among each other. The training system 200 provides the fundamental building block of game play modeling (around {D2} decisions) that can enable such targeted services seamlessly, with the aforementioned caveat of staying within the regulatory boundaries of human intelligence and not super-human game play intelligence. The training system 200 provides supervised deep learning models to mimic the game play of the most skilled players in the platform, and use these models to understand individual and cohorts of players with respect to their skill level, their strengths, weakness and frequent mistake patterns, and the value they bring to the system.

It is also important to learn the human game play behaviour in a generic manner without being affected by the inherent noise and subjectivity in the data such models will be trained on. The training system 200 introduces models and the metrics that are derived from such skilled players and provide valuable insights about the player in a reliable and timely, as they are early indicators (obtained just within a few game steps) of important metrics such as retention, revenue and engagement. Furthermore, they are completely independent of any chance factors.

The main advantages of the training system 200 include: (1) An efficient method to capture the game state and game evolution as a multi-dimensional image. The information encoded in the image also ensures that the model learns the game play accurately and generalized manner without any over-fitting. (2) A family of convolution neural network models with a custom CNN architecture and a new loss function that rewards (penalizes) game actions based on estimation of the unknown through a combination of GAN (for estimating opponents' cards) and UCB (to perform look-ahead bandit search of different game possibilities). These models don't violate the limitations of human intelligence to comply with regulations in real-money gaming. (3) Showing that mere compliance with these models sheds immense light on the potential values of revenue, retention, etc and improves win rate of the players, enabling fine-grained customized and targeted player journeys and campaigns which were otherwise not possible. (4) Context analysis of mistakes made by players provide valuable insights into the game knowledge of players, and help in identifying the strengths and weaknesses of different players. Such fine-grained understanding of when players tend to play incorrectly was previously not possible especially in a chance-independent manner.

Another example embodiment describes state snapshot for paramedic's scenario. The specific entries in the input array for the paramedics case could be as follows: (b) Location could include location of a distress call (i.e., which paramedics service provider has picked up a distress call), and consequently what equipment/medicine/resources must be available at the location (paramedics service provider) to serve the call; (c) Joker Indicator could be all purpose equipment/resources/medicines that can be used for any type of distress calls; (d) Count of all-purpose equipment/resources/medicines; (e) History of calls served by a Service provider (and also consequently the equipment/resources/medicines used for the same); (f) HQE differential can be the change in hand quality (which could be a combination of resources, equipment, and medicines available to the Paramedic Service provider) towards reaching the winning state with or without serving a distress call.

As will be appreciated by one of skill in the art, the present invention may be embodied as a method, system and apparatus. Accordingly, the present invention may take the form of an entirely hardware embodiment, a software embodiment or an embodiment combining software and hardware aspects.

It will be understood that each block of the block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

In the drawings and specification, there have been disclosed exemplary embodiments of the invention. Although specific terms are employed, they are used in a generic and descriptive sense only and not for purposes of limitation of the scope of the invention.

## Claims

1. A training method for training a user performing a predefined operation to make a best decision based on previous decisions made by skilled users in the predefined operation, the training system comprising:
processing stored instructions in a first storage module and a second storage module via at least one processor coupled with the first storage module and the second storage module, the stored instructions comprising:
storing, via the first storage module, a first log of the decisions made by the skilled users during the predefined operation;
pre-processing, via a first pre-processing module in communication with the first storage module, the first log to generate a first multi-dimensional image array of each state of the predefined operation;
training, via a training module, a model based on the first log at a predetermined state of the predefined operation that is captured as the first multi-dimensional image array to generate a skilled strategy model;
storing, via the second storage module, a second log of decisions made by the user in the predefined operation;
pre-processing, via a second pre-processing module in communication with the second storage module, the second log to generate a second multi-dimensional image array; and
comparing, via a comparison module, the second multi-dimensional image array with the skilled strategy model to generate a prediction of the best decision to be made by the user.

2. The training method as claimed in claim 1, wherein the first pre-processing module generates snapshots based on the pre-processed first log to make the first log machine readable and machine learnable.

3. The training method as claimed in claim 1, wherein the prediction of best move is displayed on a user device being used by the user so that the user is prompted to execute the best move.

4. The training method as claimed in claim 1, wherein the training module comprises a personalized upskilling module that performs personalized upskilling of the model depending on the users' mistake pattern.

5. The training method as claimed in claim 1, wherein the training module comprises a user mistake mining module that detects mistake patterns in users, which are mined without referring to the skilled strategy mode.

6. The training method as claimed in claim 1, wherein the training module comprises a skill scoring module that generates a skill score for the user depending on the deviation of users' decision from the skilled strategy model, wherein this skilled strategy model is used as a benchmark for generating the skill score for the user.

7. The training method as claimed in claim 1, wherein the training module comprises a skill-based module that conducts skill-based campaigns and services that are dependent on the users' skill that is obtained from the skill score.

8. A training system for training a user performing a predefined operation, to make a best decision based on previous best decisions made by skilled users in the predefined operation, the training system comprising:
at least one processor coupled with a first storage module and a second storage module;
the first storage module to store a first log of the decisions made by the skilled users during the predefined operation;
a first pre-processing module in communication with the first storage module to pre-process the first log to generate a first multi-dimensional image array of each state of the predefined operation;
a training module to train a model based on the first log at a predetermined state of the predefined operation, which is captured as the first multi-dimensional image array to generate a skilled strategy model;
the second storage module to store a second log of decisions made by the user in the predefined operation;
a second pre-processing module in communication with the second storage module to pre-process the second log to generate a second multi-dimensional image array; and
a comparison module to compare the second multi-dimensional image array with the skilled strategy model to generate a prediction of the best decision to be made by the user.

9. The training system as claimed in claim 8, wherein the first pre-processing module generates snapshots based on the pre-processed first log to make the first log machine readable and machine learnable.

10. The training system as claimed in claim 8, wherein the prediction of best move is displayed on a user device being used by the user so that the user is prompted to execute the best move.

11. The training system as claimed in claim 8, wherein the training module comprises a personalized upskilling module that performs personalized upskilling of the model depending on the users' mistake pattern.

12. The training system as claimed in claim 8, wherein the training module comprises a user mistake mining module that detects mistake patterns in users, which are mined without referring to the skilled strategy model.

13. The training system as claimed in claim 8, wherein the training module comprises a skill scoring module that generates a skill score for the user depending on the deviation of users' decision from the skilled strategy model, wherein this skilled strategy model is used as a benchmark for generating the skill score for the user.

14. The training system as claimed in claim 8, wherein the training module comprises a skill-based module assigns skill-based campaigns and services that are dependent on the users' skill that is obtained from a skill score.

15. A non-transitory computer program product to train a user in performing a predefined operation to make a best decision based on previous decisions made by skilled users in the predefined operation, when executed by a computer, the computer program product comprising programmed codes to:
process stored instructions in a first storage module and a second storage module via at least one processor coupled with the first storage module and the second storage module;
store, via the first storage module, a first log of the decisions made by the skilled users during the predefined operation;
pre-process, via a first pre-processing module in communication with the first storage module, the first log to generate a first multi-dimensional image array of each state of the predefined operation;
train, via a training module, a model based on the first log at a predetermined state of the predefined operation that is captured as the first multi-dimensional image array to generate a skilled strategy model;
store, via the second storage module, a second log of decisions made by the user in the predefined operation;
pre-process, via a second pre-processing module in communication with the second storage module, the second log to generate a second multi-dimensional image array; and
compare, via a comparison module, the second multi-dimensional image array with the skilled strategy model to generate a prediction of the best decision to be made by the user.
